# EUROPEAN PATENT APPLICATION

(11) **EP 0 822 109 A1**
(43) Date of publication of application: **04.02.1998**
(21) Application number: 97304404.3
(22) Date of filing: 23.06.1997
(51) Int. Cl.: B60J 10/04

(54) **Window sealing arrangements**

(30) Priority: 29.07.1996 GB 9615851
(71) Applicant: DRAFTEX INDUSTRIES LIMITED, Edinburgh EH2 3AP, Scotland (GB)
(72) Inventor: Cohen, Olivier, d'Artois, 44100 Nantes (FR)
(74) Representative: Foster, David Martyn

(57) **Abstract**

A window sealing arrangement for sealing a slidable window pane (12) mounted in the door of a motor vehicle body is described. Sealing strips (20,22) are mounted on the inner and outer panels (14,16) of the vehicle door, along the waist thereof and on opposite sides of the gap (18) through which the window glass (12) slides. The sealing strips (20,22) have lips (32,48) making sealing contact with the opposite faces of the window glass (12). In addition, each sealing strip has an enlarged reinforcement portion (34,52). The window glass (12) carries control strips (54,56) substantially co-extensive with and aligned with the sealing strips (20,22). When the window glass (12) rises into the fully closed position, the control strips (54,56) make contact with the reinforced portions (34,52) of the sealing strips (20,22) and stabilise the sealing strips (20,22) against vibration. In this way, the transmission of external sound into the passenger compartment of the vehicle is eliminated or reduced, by preventing the seal (22) on the outside of the vehicle from vibrating in response to such sound and transmitting such vibration to and through the window glass (12) to the interior of the vehicle.

## Description

The invention relates to a window sealing arrangement for providing a seal against a face of a window glass which is slidable relative to a rigid member between first and second limit positions, comprising a sealing strip mountable on the rigid member for making sealing contact with the face of the window glass and control means mounted on the face of the window glass so as to move freely with the window glass during the major part of the sliding movement of the window glass but being moved by the window glass into an abutment position when the window glass approaches one of the limit positions so as then to restrain vibratory movement of the window glass relative to the rigid member.

Such a window sealing arrangement is shown in EP-A-0 694 429. In this known arrangement, for use in a vehicle, the control means comprises a profile which is attached to a face of the window glass and positioned so that, as the window glass rises towards the closed position, this profile comes into contact with the rigid member which, in the example described, is an outer panel of a vehicle door into which the window glass is lowered and from which it is raised. The contact between the profile carried by the glass and the panel of the door is stated to reduce vibrations, and also to close the gap between the window glass and the door panel. However, the sealing strip itself, being inherently flexible, may vibrate in response to external acoustic energy and will transmit such vibration to the window glass. Even though the contact between the profile in this known arrangement and the door panel may reduce vibrations of the window glass, it will not necessarily stop the window glass from vibrating in response to vibratory movement of the sealing strip. The invention aims to deal with this problem.

In accordance with the invention, therefore, the known arrangement as first set forth above is characterised in that the abutment position is a position in which the control means causes the sealing strip to be clamped more securely to the rigid member and thus to reduce vibratory movement of the sealing strip relative to the rigid member and the consequent transmission of such vibratory movement to the window glass.

In this way, the control means carried by the window glass positively "locks" the sealing strip to the rigid member when the window glass approaches the specified limit postion (e.g. the closed position of the window glass) and minimises or eliminates vibration of the sealing strip relative to the rigid member and any consequent transmission of such vibration to the window glass. At other positions of the window glass, however, the full flexibility, and thus the sealing ability, of the sealing strip is preserved.

Window sealing arrangements embodying the invention, and for use in sealing the movable window panes in motor vehicles windows, will now be described, by way of example only, with reference to the accompanying diagrammatic drawings in which:
Figure 1 is a perspective view of a motor vehicle body;
Figure 2 is a cross-section on the line II-II of Figure 1 showing one of the window sealing arrangements with the window glass in a partially open position;
Figure 3 is a cross-section corresponding to Figure 2 but showing the window glass fully closed;
Figure 4 corresponds to Figure 2 but shows a modified construction with the window glass in a partially open position;
Figure 5 corresponds to Figure 3 and shows the arrangement of Figure 4 in the fully closed position;
Figure 6 corresponds to Figures 2 and 4 and shows another of the window sealing arrangements in a partially closed position; and
Figure 7 corresponds to Figures 3 and 5 and shows the arrangement of Figure 6 in the fully closed position.

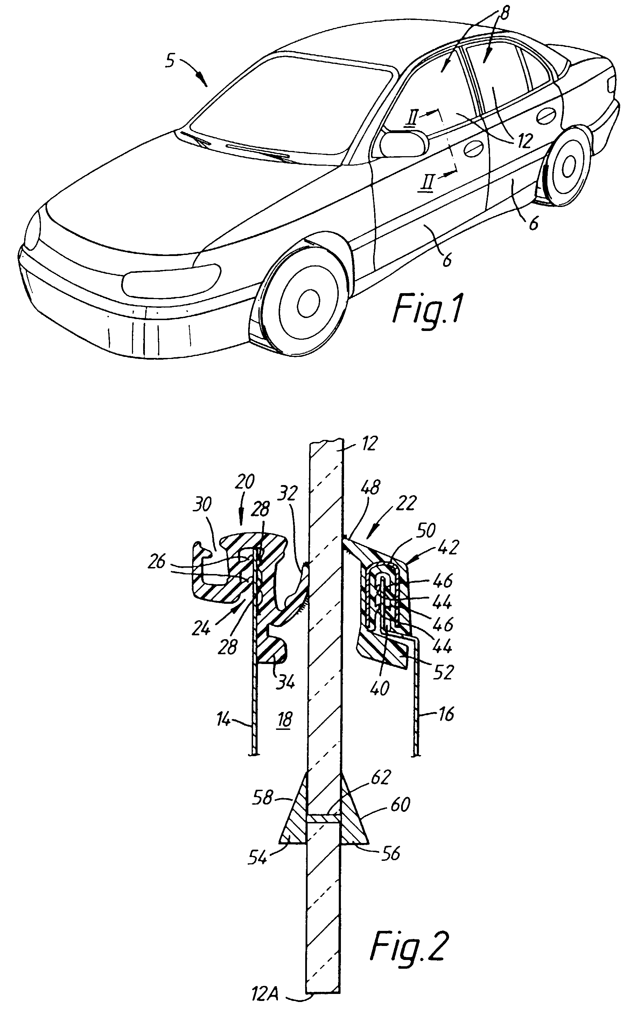

Figure 1 shows a motor vehicle body 5 having doors 6. The upper part of each door comprises a window 8 with a window glass 12 which can be lowered into and raised from the lower part of the door 6. The glass 12 may be raised and lowered by a motor-driven or manually-operated mechanism.

Figure 2 is a cross-section on the line II-II of Figure 1. Figure 2 shows the inner and outer panels 14,16 of the door 6 which provide a gap 18 through which the window glass 12 is raised and lowered. In order to provide a seal along the gap 18 between the glass 12 and the inner and outer panels 14,16 of the door, sealing strips 20,22 (so-called waist seals) are provided, which run longitudinally along the top edges of the panels 14,16.

As shown, the seals 20,22 are of channel-shape. The seal 20 on the inside of the window opening (that is, inside the passenger compartment of the vehicle) comprises a channel 24 defining integral gripping lips 26 and 28 which run longitudinally along the opposite facing walls inside the channel 24 and extend into frictional gripping engagement with the opposite sides of the flange formed at the distal edge of the panel 28.

One side wall of the channel 24 is extended to provide a channel 30 facing in the opposite direction to channel 24. Channel 30 receives an edge of the trim material (not shown) on the door panel 14 and grips the trim to hold it in position.

The opposite side wall of the channel 24 is extended to provide a sealing lip 32 which engages the surface of the window glass 12 on the inside of the vehicle. In addition, this side wall of the channel 24 is extended downwardly, alongside the panel 14, in the form of a reinforcement portion 34.

The seal 20 may be extruded or moulded from plastics or rubber or similar material. It may be all of the same hardness. However, parts of it may advantageously be softer than others; for example, the gripping lips 26,28 may be relatively soft to increase their frictional grip on the door panel 14. The lip 32 may also be relatively soft. The surface of the lip 32 in contact with the glass 12 may be covered with flock or similar material to provide a low-friction contact with the window glass 12 without impairing the sealing function.

The seal 22 on the outside of the door also defines a channel 40 and may again be extruded or moulded from plastics or rubber or similar material 42. The material 42 is integrally formed with gripping lips 44,46 corresponding to the lips 26,28 for the seal 20. In addition, the material 42 defines a lip 48 for sealingly engaging the outer face of the window glass 12. The material 42 incorporates a reinforcing channel-shaped metal carrier 50, which may be incorporated using a known cross-head extrusion process. The carrier may be of any suitable form. For example, it may comprise U-shaped metal elements arranged side-by-side to define the channel and integrally connected together by flexible links or entirely unconnected. Instead, looped wire may be used. The carrier and the gripping lips 44,46 ensure that the channel 40 firmly grips the flange formed by the distal edge of the outer door panel 16.

In addition, the material 40 defines an integral thickened reinforcement part 52.

Again, the material 40 may be all of the same hardness. Instead, though, some parts of it may be softer than others; for example, it may be advantageous for the lips 44,46 and 48 to be relatively soft. The surface of the lip 48 in contact with the window glass may be covered with flock or similar material.

The window glass 12 is itself modified by the attachment of control strips 54,56 which run longitudinally along opposite surfaces of the window glass, near its lower edge 12A. The strips may be attached to the glass 12 in any suitable way such as by means of a fixture 62 (or several such fixtures) passing through the glass.

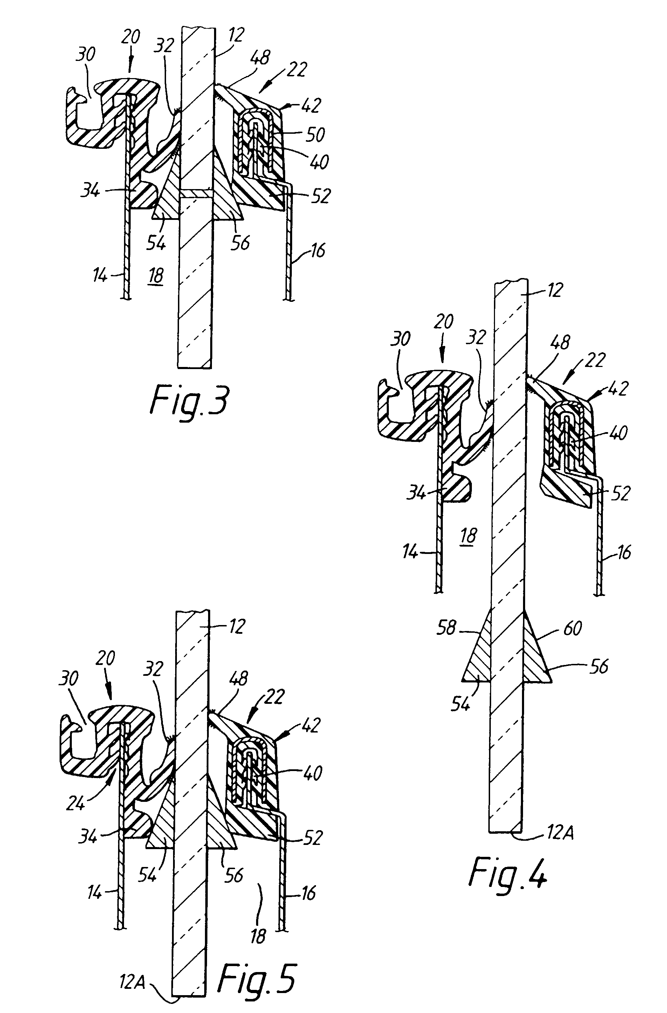

In operation, the lips 32,48 make sealing contact with the inner and outer faces of the window glass 12 as it is raised or lowered and prevent the entry of rain etc. into the lower part of the door 6. In addition, though, and as shown in Figure 3, the control strips 54,56 come into respective contact with the reinforcement 34 and 52 of the seals 20,22 as the window glass 12 rises to its fully closed position. As shown in Figure 3, the control strips 54,56 press the reinforcements 34,52 into firmer contact with the door panels 14,16. In this way, the control strips 54,56 ensure that the seals 20,22 are held more firmly in position on the panels 14,16 when the window glass is fully closed. This ensures that any tendency for the seals 20,22 to vibrate in response to acoustic waves is eliminated or at least very substantially reduced. In particular, the possibility is eliminated or very significantly reduced, that the seal 22 on the outside of the door will vibrate in response to noise external to the vehicle, and will transmit such vibration to the glass 12 and via the glass 12 to the seal 20 and thus to the interior of the vehicle. Such vibrations of the glass 12 often in the form of vibrations extending longitudinally along the waist, are a significant source of noise inside the passenger compartment of the vehicle, thus being a means by which external noise is transmitted into the passenger compartment. The transmission of such noise is therefore eliminated or significantly reduced by the interaction of the control strips 54,56 with the seals 20 and 22.

At the same time, though, the seals 20,22 are not affected by the control strips 54,56 when the window glass is moving into or out of the fully closed position. They are thus free to flex as necessary to accommodate the moving glass.

It will be appreciated that various modifications may be made to the sealing arrangement shown in Figures 2 and 3. The seals 20,22 are shown purely by way of example and may take different forms. The reinforcements 34,52 may also take different forms. There may be a reinforcement only on one of the seals, instead of on both as shown; in such a case, there therefore need only be a single control strip 54 or 56, on the appropriate face of the window glass. It may not be necessary to add a specific reinforcement to one or both of the seals; a normal seal could be used in a case where it has a part which can be contacted by an appropriately shaped control strip on the window glass. The shapes of the control strips shown in Figures 2 and 3 are purely by way of example and can be varied as necessary

Figures 4 and 5 correspond to Figures 2 and 3 and show a modified construction. In the construction of Figures 4 and 5, the control strips 54,56 are glued to the opposite facing surfaces of the window glass 12 instead of being fixed to it by the fixture 62 of Figure 2.

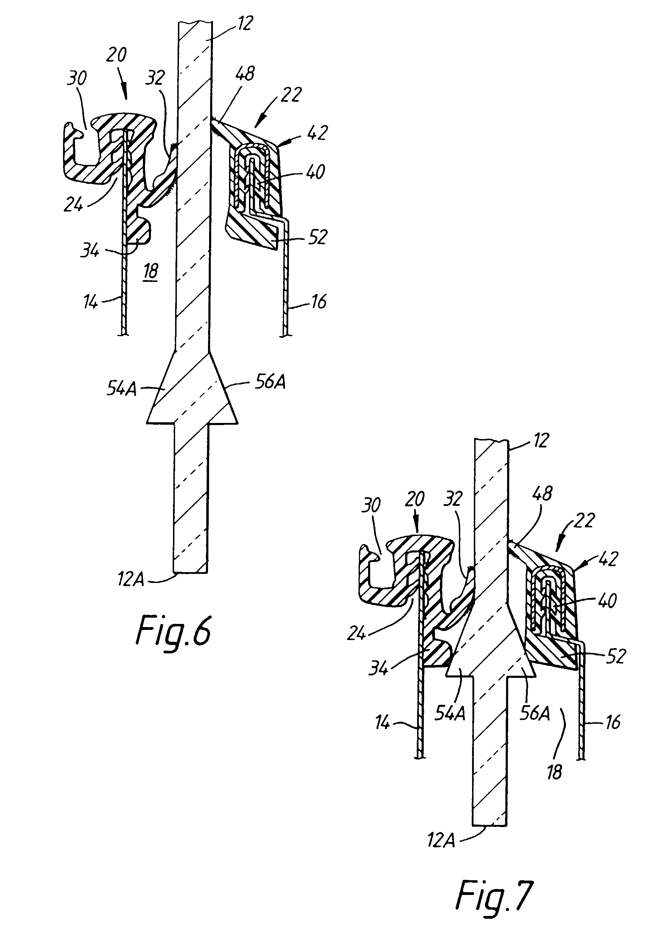

In the embodiment of Figures 6 and 7, which correspond to Figures 2 and 3 and to Figures 4 and 5, the control strips 54,56 are replaced by similarly shaped regions 54A,56A formed integrally with the window glass during manufacture of the glass.

The reinforcements 34,52 must not only be shaped so as to operate satisfactorily when contacted by the control strips 54,56 but must also be shaped so that the seals 20,22 can be placed in position during initial assembly. Thus, if the glass 12 is already in position when the seals 20,22 come to be fitted, it is clearly necessary for there to be sufficient space between the glass 12 and the panels 14,16 for the reinforcements 34,52 to pass through. If the glass 12 is to be inserted in position after the seals 20,22 have been mounted in position, then there must be sufficient space for insertion of the window glass. In such a case, it may be advantageous or necessary to fit the control strips 54,56 into position on the window glass 12 after it has been inserted in position. An arrangement as shown in Figures 2 and 3, or in Figures 4 and 5, may therefore be more advantageous in such circumstances than the arrangement shown in Figures 6 and 7 where the control strips are integral.

## Claims

1. A window sealing arrangement for providing a seal against a face of a window glass (12) which is slidable relative to a rigid member (14,16) between first and second limit positions, comprising a sealing strip (20,22) mountable on the rigid member (14,16) for making sealing contact with the face of the window glass (12) and control means (54,56;54A,56A) mounted on the face of the window glass (12) so as to move freely with the window glass (12) during the major part of the sliding movement of the window glass (12) but being moved by the window glass (12) into an abutment position when the window glass approaches one of the limit positions so as then to restrain vibratory movement of the window glass (12) relative to the rigid member (14,16), characterised in that the abutment position is a position in which the control means (54,56;54A,56A) causes the sealing strip (20,22) to be clamped more securely to the rigid member (14,16) and thus to reduce vibratory movement of the sealing strip (20,22) relative to the rigid member (14,16) and the consequent transmission of such vibratory movement to the window glass (12).

2. An arrangement according to claim 1, characterised in that the control means (54,56;54A,56A) abuts against a portion (34,52) of the sealing strip (20,22) to clamp the sealing strip (20,22) more securely to the rigid member (14,16).

3. An arrangement according to claim 2, characterised in that the sealing strip (20,22) incorporates a reinforcement portion (34,52) adapted to be abutted by the control means (54,56;54A,56A) in the abutment position.

4. An arrangement according to claim 2 or 3, characterised in that the control means (54,56;54A,56A) defines a surface (58,60) for abutting the sealing strip (20,22), the surface (58,60) being inclined away from the face of the window glass (12) in the direction opposite to the direction in which the control means (54,56;54A,56A) approaches the sealing strip (20,22) as the window glass (22) moves towards the said one limit position.

5. An arrangement according to any preceding claim, characterised in that the control means (54,56;54A,56A) extends longitudinally along the face of the window glass (12) and substantially co-extensive and aligned with the sealing strip (20,22).

6. An arrangement according to any preceding claim, characterised in that the control means (54,56) is separate from the window glass (12) but fixed thereto.

7. An arrangement according to claim 6, characterised in that the control means (54,56) is fixed to the window glass (12) by clip means (62).

8. An arrangement according to claim 6, characterised in that the control means (54,56) is fixed to the window glass (12) by adhesive.

9. An arrangement according to claim 6, characterised in that the control means (54A,56A) is integrally formed with the window glass (12).

10. An arrangement according to any preceding claim, characterised by a second sealing strip (20,22) mountable on the rigid member (14,16) for sealing against the opposite face of the window glass (12).

11. An arrangement according to claim 10, characterised by second control means (54,56;54A,56A) on the opposite face of the window glass (12) for abutting the second sealing strip (20,22) when the control means (54,56;54A,56A) moves into the abutment position and thereby clamping the sealing strip (20,22) more securely to the rigid member (14,16) and thus reducing vibratory movement of the second sealing strip (20,22) relative to the rigid member (14,16) and the consequent transmission of such vibratory movement to the window glass (12).

12. An arrangement according to claim 11, characterised in that the second sealing strip (20,22) includes a reinforcement portion (34,52) positioned to be contacted by the second control means (54,56;54A,56A) in the abutment position.

13. An arrangement according to any preceding claim, characterised in that the or each sealing strip (20,22) incorporates a channel-shaped portion (24,40) for embracingly gripping the rigid member (14,16).

14. An arrangement according to any preceding claim, characterised in that the said one limit position corresponds to the closed position of the window glass (12), and the other limit position corresponds to the open position of the window glass (12).
